Europäisches Patentamt

European Patent Office

Office européen des brevets

(11) Numéro de publication : **0 304 345 B1**

(12)                              **FASCICULE DE BREVET EUROPEEN**

(45) Date de publication du fascicule du brevet :
28.08.91 Bulletin 91/35

(51) Int. Cl.⁵ : **B63G 3/04, F16F 1/00, F41F 3/00**

(21) Numéro de dépôt : 88401572.8

(22) Date de dépôt : 22.06.88

(54) **Système de suspension d'éléments cylindriques dans des conteneurs notamment systèmes de suspension de missiles pour sous-marins lance-missiles.**

(30) Priorité : 04.08.87 FR 8711046

(43) Date de publication de la demande :
22.02.89 Bulletin 89/08

(45) Mention de la délivrance du brevet :
28.08.91 Bulletin 91/35

(84) Etats contractants désignés :
AT BE CH DE ES GB GR IT LI LU NL SE

(56) Documents cités :
FR-A- 619 686
FR-A- 2 566 077
US-A- 2 717 130
US-A- 4 665 792

(73) Titulaire : CONSTRUCTIONS INDUSTRIELLES
DE LA MEDITERRANEE C.N.I.M.
35 rue de Bassano
F-75008 Paris (FR)

(72) Inventeur : Jennequin, Gérard
La Farandole 45
I-83140 Six Fours (FR)
Inventeur : Orquera, Henri
756, ch.de Fabre à Gavet
I-83500 La Seyne sur mer (FR)

(74) Mandataire : Armengaud Aîné, Alain
Cabinet ARMENGAUD AINE 3 Avenue
Bugeaud
F-75116 Paris (FR)

## Description

La présente invention est relative à un système de suspension d'éléments notamment cylindriques, dans des conteneurs présentant de préférence une forme générale cylindrique, et elle s'applique en particulier à la suspension des missiles utilisés à bord des sous-marins lance-missiles, en vue d'assurer leur protection à l'encontre des chocs et/ou vibrations tout en maintenant un débattement important entre le missile et son tube de lancement, dans un encombrement réduit. Ce système est conçu de manière à permettre un déplacement dans toutes les directions et est optimisé en vue de l'obtention des raideurs désirées dans chacune desdites directions.

On sait que les missiles qui sont utilisés à bord des sous-marins lance-missiles se présentent sous la forme d'un corps sensiblement cylindrique qui est logé dans un conteneur, lui-même logé à l'intérieur d'un tube de lancement solidaire du sous-marin et présentant également une forme cylindrique, dont le volume est supérieur à celui du système missile-conteneur afin d'assurer un débattement éventuel relativement important du système missile-conteneur par rapport à son tube de lancement. On est donc amené à prévoir un système de suspension souple interposé entre les deux cylindres (missile-conteneur et tube de lancement) permettant de faire supporter la masse du missile sur la structure du sous-marin.

A l'heure actuelle, les suspensions utilisées dans les sous-marins lance-missiles sont réalisées à l'aide de systèmes amortisseurs classiques tels que notamment des ressorts conventionnels (ressorts hélicoïdaux ou blocs d'élastomères) et d'amortisseurs hydrauliques. Ainsi US-A-4665792 décrit un système de support et de suspension pour missiles comportant deux anneaux circulaires reliés par des amortisseurs hydrauliques, l'un des anneaux étant fixé sur le missile et l'autre sur son système de lancement. Ces systèmes connus présentent d'une part l'inconvénient de réduire le débattement possible entre le missile et son logement et, d'autre part, de nécessiter la réservation d'un espace relativement important pour positionner les systèmes de suspension.

La présente invention se propose de palier les inconvénients des systèmes connus, en ajustant au mieux l'encombrement géométrique du système de suspension avec l'espace annulaire qui est disponible entre chaque missile et son logement.

Le système de suspension objet de la présente invention est caractérisé en ce qu'il est constitué par une nappe de ressorts unitaires formées de barres de flexion/torsion cintrées, qui sont disposées sur la périphérie d'un cylindre, l'une des parties supérieure ou inférieure de ce cylindre étant liée au système suspendu, c'est à dire au missile, alors que l'autre partie est liée au logement du missile c'est à dire au tube cylindrique solidaire du sous-marin.

Grâce à ces caractéristiques, le système de suspension constitue un ensemble multi-ressorts, de configuration générale cylindrique interposé entre le missile et son logement, qui présente les caractéristiques désirées répondant à l'objectif mentionné ci-dessus, c'est à dire un ajustement optimal de l'encombrement du système de suspension en fonction de l'espace annulaire disponible entre le missile et son logement et permettant également un déplacement dans toutes les directions avec l'obtention des raideurs désirées dans chacune de ses directions.

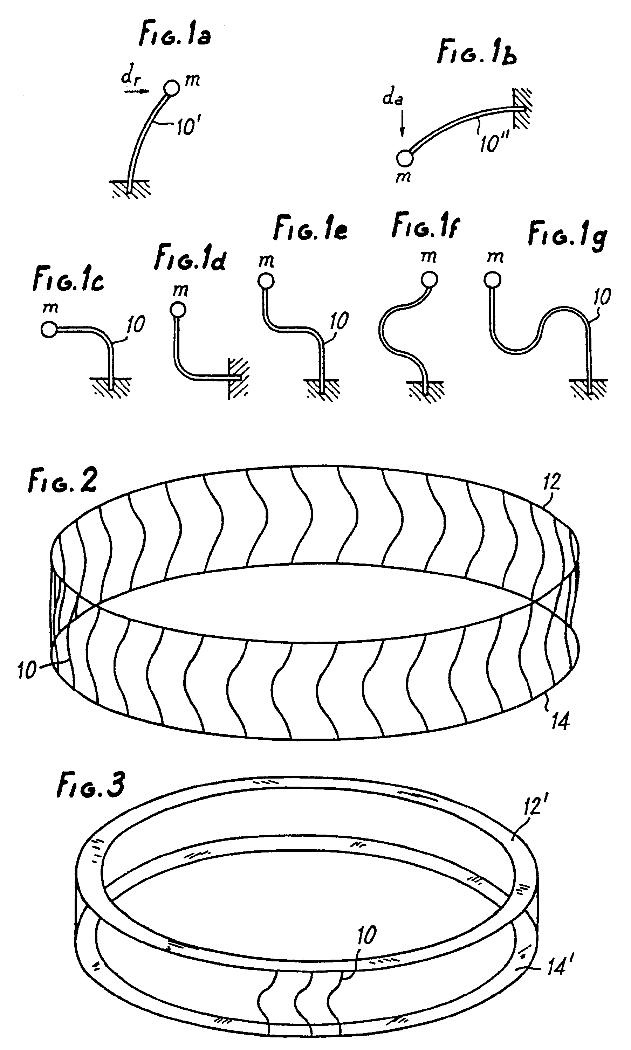

Afin de mieux faire comprendre les principes sur lesquels repose le système de suspension objet de la présente invention, on se référera aux figures 1a à 1g qui représentent des exemples de réalisation d'un ressort unitaire utilisé dans le système de suspension selon l'invention.

Chacun des ressorts unitaires 10 est constitué d'une barre travaillant en flexion/torsion supportant une partie m de la masse totale du missile. Comme on le voit sur les figures ces barres sont cintrées de façon à présenter :

   a) une ou plusieurs parties 10′ figure 1a, absorbant le déplacement radial (horizontal) schématisé par la flèche dr et

   b) une ou plusieurs parties 10″ absorbant les déplacements axiaux (verticaux) schématisés par la flèche da.

Les figures 1c à 1g illustrent un certain nombre d'exemples de formes de ressorts unitaires permettant d'obtenir ce double effet (déplacement radial et déplacement axial).

Selon la présente invention, les ressorts unitaires sont réalisés de préférence en métal ou en un matériau composite tel que notamment fibres de verre/résine époxy. Leur section peut être quelconque (ronde, carrée ou rectangulaire) et leur courbure ainsi que leur élancement sont adaptés en vue de l'obtention des caractéristiques de raideur requises dans chaque direction des déplacements.

D'autres caractéristiques et avantages de la présente invention ressortiront de la description faite ci-après en référence aux dessins annexés qui en illustrent divers exemples de réalisation dépourvus de tout caractère limitatif. Sur les dessins :

   Les figures 1a et 1b sont les croquis discutés ci-dessus permettant de comprendre les principes sur lesquels repose l'invention ;
   Les figures 1c à 1g sont des schémas représentant divers exemples de réalisation de formes de ressorts unitaires utilisés dans le système de suspension selon la présente invention ;
   La figure 2 est un schéma en perspective représentant la nappe de ressort du sytème de suspension selon l'invention ;
   La figure 3 est une vue en perspective représentant, de façon schématique, le système de suspension objet de la présente invention ;

Les figures 4 et 5 sont des vues schématiques représentant diverses formes de réalisation de ressorts unitaires utilisés dans le système de suspension objet de cette invention, ces formes étant choisies en fonction des contraintes d'installation ;

Les figures 6 et 7 sont des vues schématiques de ressorts unitaires dans lesquels on a prévu des moyens permettant d'obtenir l'amortissement désiré pour le système de suspension ;

La figure 8 est une vue en perspective d'un second exemple de réalisation d'une nappe de ressorts utilisée pour réaliser le système de suspension selon cette invention et

La figure 9 représente, à titre d'exemple non limitatif, comment le système de suspension objet de la présente invention est mis en oeuvre pour assurer la suspension d'un missile dans son logement à bord d'un sous-marin lance-missiles.

En se référant en premier lieu aux figures 2 et 3, on voit que le système de suspension objet de la présente invention comporte essentiellement une nappe de forme générale cylindrique réalisée à l'aide de ressorts élémentaires 10 dont les formes de réalisation possibles sont illustrées sur les figure 1c à 1g. Comme on le voit sur le dessin, la forme générale est plane et légèrement incurvée afin de répartir tous les ressorts élémentaires 10 sur la surface d'un cylindre (ou d'un cône). La partie supérieure circulaire 12 de la nappe ainsi constituée est liée au système suspendu (c'est à dire au missile dans cet exemple d'application) et la partie inférieure circulaire 14 de la nappe de ressort est liée au logement de l'élément à suspendre (c'est à dire au tube de lancement du missile dans le cas de l'application considérée, ce tube étant relié à la structure du sous-marin). Sur la figure 3, on voit que la nappe de ressorts élémentaires telle que 10 est maintenue entre deux couronnes circulaires 12' et 14', la couronne 12' étant liée au système suspendu (missile) alors que la couronne inférieure 14' est liée au sous-marin par l'intermédiaire du tube de lancement de ce dernier.

On obtient ainsi un système d'amortissement dont l'encombrement total est celui d'un cylindre ou d'un cône, de faible épaisseur, limité par les deux couronnes 12' et 14'. L'ensemble ainsi réalisé permet d'obtenir un déplacement relatif des deux couronnes dans toutes les directions, ce qui permet d'assurer la fonction de suspension anti-choc et/ou vibratoire tout en permettant un débattement important dans un encombrement réduit.

Les ressorts unitaires 10 peuvent être disposés de façon à ménager des passages notamment des éléments de structure du sous-marin :

Sur la figure 4, on a représenté une forme de ressorts incurvés 10a permettant le passage d'un renfort de coque 16 et sur la figure 5, cette même forme de ressorts incurvés 10a permet le passage d'une tubulure 18.

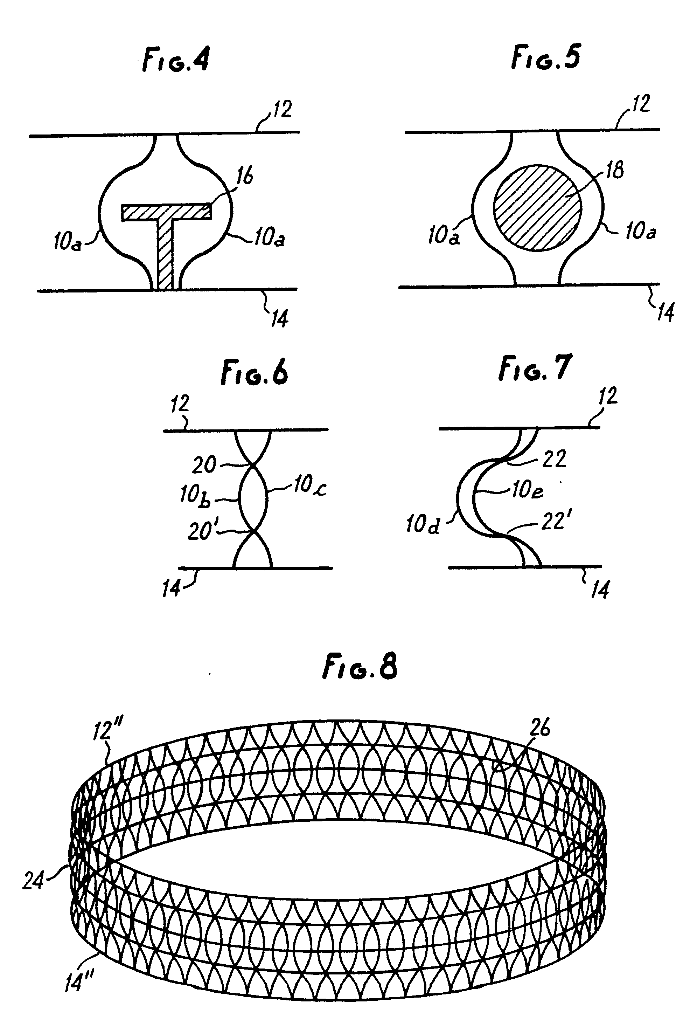

Pour améliorer l'amortissement recherché, on peut réaliser un frottement sec ou visqueux des ressorts 10 sur eux-mêmes et/ou sur un matériau interposé entre les ressorts. C'est ainsi que la figure 6 illustre un exemple de réalisation utilisant deux nappes de ressorts croisés 10c 10b frottant sur eux-mêmes en des points 20, 20', la figure 7 représentant un exemple de réalisation répondant aux mêmes préoccupations, dans lequel l'amortissement désiré est obtenu à l'aide de deux nappes de ressorts parallèles 10d 10e frottant les uns sur les autres aux points 22, 22'.

Selon une caractéristique de cette invention, en vue d'obtenir l'étanchéité du système d'amortissement cylindrique ainsi réalisé, on peut effectuer un enrobage de la nappe de ressorts à l'aide d'un matériau de préférence du type élastomère.

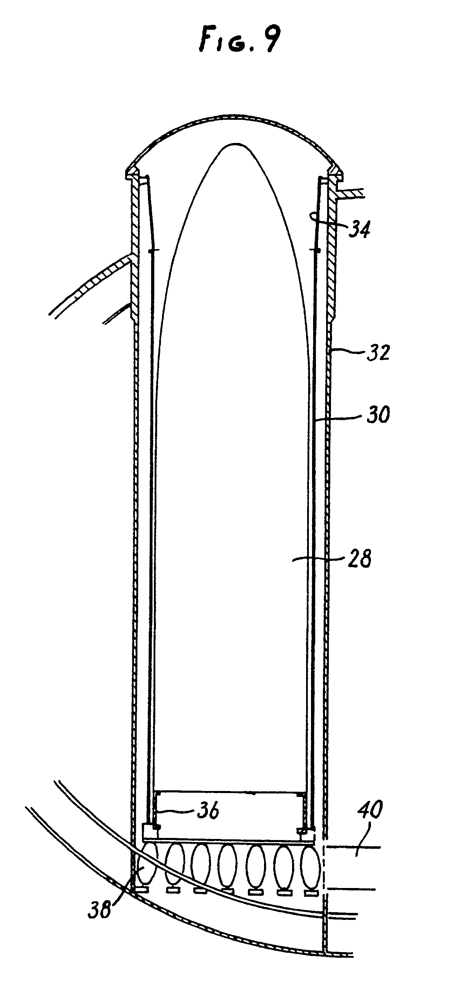

La figure 8 illustre un autre exemple de réalisation d'un système d'amortissement selon l'invention comportant, comme décrit ci-dessus, une nappe de ressorts désignée dans son ensemble par la référence 24, interposée entre deux couronnes 12" et 14" similaires aux couronnes 12, 14 et 12', 14' (figures 2 et 3), la résistance à la pression dans cette variante étant obtenue par bobinage de cercles circulaires tels que 26 sur la nappe de ressorts 24, avant de réaliser l'enrobage de cette dernière par un matériau élastomère.

On se réfère maintenant à la Figure 9 qui est une vue schématique en coupe par un plan vertical et qui représente un exemple d'application du système selon l'invention à la suspension d'un missile dans le tube de lancement d'un sous-marin lance-missile.

Sur cette Figure 9, on voit en 28 le missile dans son conteneur 30, l'ensemble missile 28 plus conteneur 30 étant logé comme connu dans le tube de lancement 32. Ce missile est lancé hors du sous-marin par de l'air comprimé et on a représenté en 40 la tubulure de chasse.

Conformément à cet exemple d'application de l'invention, le missile 28 et son tube 30 sont suspendus dans le tube de lancement 32 :

1) à la partie supérieure du tube 32 à l'aide d'un système de suspension 34 selon l'invention conforme à l'un quelconque des exemples de réalisation décrits ci-dessus, la couronne supérieure de ce système de suspension 34 étant liée au tube de lancement 32 (c'est-à-dire au sous-marin) alors que la couronne inférieure de ce système de suspension 34 est liée à l'ensemble missile plus conteneur 30 ;

2) à la partie inférieure du tube 32 à l'aide d'un système de suspension 36 selon l'invention, dont la couronne inférieure est rendue solidaire du tube conteneur 32 et la couronne supérieure rendue solidaire du missile 28'.

3) à la partie inférieure du tube 32 à l'aide d'un système de suspension 38 selon l'invention, dont la couronne supérieure est solidaire du tube conteneur 32 et la partie inférieure solidaire de la coque du sous-marin laissant libres des passages notamment pour les renforts de coques.

## Revendications

1. Système de suspension d'éléments notamment cylindriques dans des logements ou conteneurs présentant de préférence une forme générale cylindrique, en vue d'assurer leur protection à l'encontre des chocs et/ou des vibrations tout en maintenant un débattement important entre l'élement cylindrique et son logement, dans un encombrement réduit, ce sytème permettant d'obtenir un déplacement dans toutes les directions et ce déplacement étant optimisé en vue de l'obtention des raideurs désirées dans chacune desdites directions, caractérisé en ce qu'il est constitué par une nappe de ressorts unitaires (10) formée de barres de flexion/torsion cintrées, qui sont disposées sur la périphérie d'un cylindre dont l'une des parties (12) supérieure ou inférieure est liée au système suspendu et dont l'autre partie (14) est liée au conteneur ou logement recevant l'élément suspendu.

2. Système de suspension selon la revendication 1 caractérisé en ce que les ressorts unitaires (10) sont réalisés en métal ou en un matériau composite tel que notamment fibres de verre/résine époxy.

3. Système de suspension selon l'une des revendications 1 et 2 caractérisé en ce que la nappe de ressorts élémentaires (10) est maintenue entre deux couronnes circulaires (12′ 14′), la couronne (12′) étant liée à l'élément suspendu et la couronne (14′) étant liée au logement dudit élément suspendu.

4. Système de suspension selon l'une quelconque des revendications précédentes caractérisé en ce que les ressorts élémentaires (10a) constituant la nappe de ressorts présentent une forme incurvée afin de laisser libre un passage entre deux ressorts.

5. Système de suspension selon l'une quelconque des revendications précédentes caractérisé en ce que, en vue d'améliorer l'amortissement on réalise un frottement sec ou visqueux des ressorts (10) soit sur eux-mêmes soit sur un matériau interposé entre les ressorts.

6. Système de suspension selon l'une quelconque des revendications précédentes caractérisé en ce que, en vue d'obtenir l'étanchéité du système on effectue un enrobage de la nappe de ressorts à l'aide d'un matériau approprié de préférence du type élastomère.

7. Système de suspension selon l'une quelconque des revendications précédentes caractérisé en ce que, en vue d'améliorer la résistance à la pression de la nappe de ressorts (24) on réalise un bobinage de cercles circulaires (26) sur ladite nappe de ressorts (24), avant de réaliser l'enrobage de cette dernière par un matériau élastomère.

8. Système de suspension selon l'une quelconque des revendications précédentes caractérisé en ce qu'il est appliqué à la suspension d'un missile (28) dans le tube de lancement (32) d'un sous-marin lance-missile, la suspension étant réalisée :

a) à la partie supérieure du tube (32) à l'aide d'un système de suspension (34) selon l'une quelconque des revendications précédentes dont la couronne supérieure est liée au tube de lancement (32) alors que la couronne inférieure est liée au missile ;

b) à la partie inférieure du tube (32) à l'aide d'un second système de suspension (36), selon l'une quelconque des revendications précédentes, dont la couronne supérieure est rendue solidaire du missile et dont la couronne inférieure est rendue solidaire du tube conteneur ;

c) à la partie inférieure de l'ensemble à l'aide d'un troisième système de suspension (38) selon l'une quelconque des revendications précédentes, dont la partie supérieure est rendue solidaire du tube conteneur (32) et la partie inférieure solidaire de la coque du sous-marin et conçue et réalisée de manière à laisser libres des passages tels que renforts de coques, etc.

## Patentansprüche

1. Aufhängesystem mit geringen Abmessungen für insbesondere zylindrische Elemente in Behältnissen oder Behältern mit einer vorzugsweise im allgemeinen zylindrischen Form zu deren Schutz gegen Stöße und/oder Vibrationen unter Aufrechterhaltung eines beträchtlichen Durchfederungsweges zwischen dem zylindrischen Element und seinem Behälter, wobei es dieses System ermöglicht, eine Verschiebung in alle Richtungen zu erhalten und wobei diese Verschiebung im Hinblick auf die Herbeiführung der gewünschten Steifigkeit in jede dieser Richtungen optimiert ist, dadurch **gekennzeichnet**, daß es aus einem Ring aus gleichen Federn (10) besteht, der aus gebogenen Biege-/Torsionsstäben aufgebaut ist, welche auf dem Umfang eines Zylinders angeordnet sind, dessen einer oberer oder unterer Abschnitt (12) mit dem Aufhängesystem verbunden ist und dessen anderer Abschnitt (14) mit dem das aufgehängte Element aufnehmenden Behälter oder Behältnis verbunden ist.

2. Aufhängesystem nach Anspruch 1, dadurch **gekennzeichnet**, daß die gleichen Federn (10) aus einem Metall oder einem Kompositmaterial, beispielsweise Glasfasern/Epoxyharz gefertigt sind.

3. Aufhängesystem nach Anspruch 1 oder 2, dadurch **gekennzeichnet**, daß der Ring aus Federelementen (10) zwischen zwei kreisförmigen Kränzen (12′, 14′) gehalten ist, wobei der Kranz (12′) mit dem aufgehängten Element verbunden ist und der Kranz (14') mit dem Behälter für dieses aufgehängte Element verbunden ist.

4. Aufhängesystem nach einem der vorhergehenden Ansprüche, dadurch **gekennzeichnet,** daß die Federelemente (10a), welche den Federring darstellen, eine gekrümmte Form besitzen, so daß eine Passage zwischen diesen Federn freigelassen wird.

5. Aufhängesystem nach einem der vorhergehenden Ansprüche, dadurch **gekennzeichnet,** daß zur Dämpfungsverbesserung eine trockene oder viskose Reibung der Federn (10) entweder aneinander oder an einem zwischen den Federn zwischengelegtem Material stattfindet.

6. Aufhängesystem nach einem der vorhergehenden Ansprüche, dadurch **gekennzeichnet,** daß der Federring mit einem geeigneten Material, vorzugsweise mit einem Elastomermaterial, zur Verbesserung der Abdichtung des Systems ummantelt ist.

7. Aufhängesystem nach einem der vorhergehenden Ansprüche, dadurch **gekennzeichnet,** daß der Federring (24) zur Erhöhung des Druckwiderstandes des Federringes (24) mit einem Wickel aus Kreisringen (26) ausgestattet wird, bevor der Federring in ein elastomeres Material eingebettet wird.

8. Aufhängesystem nach einem der vorhergehenden Ansprüche, dadurch **gekennzeichnet,** daß es zur Aufhängung eines Geschosses (28) in einem Lancierungsrohr (32) eines Unterwasserschiffes zur Geschoßlancierung dient, wobei die Aufhängung verbunden ist mit

a) dem oberen Abschnitt des Rohres (32) mit Hilfe eines Aufhängesystems (34) nach einem der vorhergehenden Ansprüche, dessen oberer Kranz mit dem Lancierungsrohr (32) verbunden ist, während der untere Kranz mit dem Geschoß verbunden ist ;

b) dem unteren Abschnitt des Rohres (32) mit Hilfe eines zweiten Aufhängesystems (36) nach einem der vorhergehenden Ansprüche, dessen oberer Kranz mit dem Geschoß verbunden ist und dessen unterer Kranz mit dem den Behälter darstellenden Rohr verbunden ist ;

c) dem unteren Abschnitt der Einheit mit Hilfe eines dritten Aufhängesystems (38) nach einem der vorhergehenden Ansprüche, dessen oberer Abschnitt mit dem den Behälter darstellenden Rohr (32) verbunden ist und dessen unterer Abschnitt mit der Hülle des Unterwasserschiffes verbunden ist sowie derart konzipiert und realisiert ist, daß Passagen, beispielsweise Verstärkungen der Hülle etc., freigelassen sind.

## Claims

1. Suspension system for especially cylindrical elements in seatings or containers preferably having a generally cylindrical shape, for the purpose of assuring their protection against shocks and/or vibrations while maintaining a considerable deflection between the cylindrical element and its seating, within a reduced overall bulk, this system making it possible to obtain a displacement in every direction and this displacement being optimized for the purpose of achieving the desired stiffnesses in each of said directions, characterized in that the system is composed of a layer of unitary springs (10), formed of curved flexion/torsion bars, which are disposed on the periphery of a cylinder, of which one of the parts (12), upper or lower, is connected to the suspended system and of which the other part (14) is connected to the container or seating receiving the suspended element.

2. Suspension system according to Claim 1, characterized in that the unitary springs (10) are formed of metal or of a composite material, such as notably glass fibres/epoxy resin.

3. Suspension system according to one of Claims 1 and 2, characterized in that the layer of elementary springs (10) is held between two circular rings (12', 14'), the ring (12') being connected to the suspended element and the ring (14') being connected to the seating for said suspended element.

4. Suspension system according to any one of the preceding Claims, characterized in that the elementary springs (10a) constituting the layer of springs have a curved form in order to leave a passage free between two springs.

5. Suspension system according to any one of the preceding Claims, characterized in that, for the purpose of improving the damping, dry or viscous friction of the springs (10) is created, either on the springs themselves or on a material interposed between them.

6. Suspension system according to any one of the preceding Claims, characterized in that, for the purpose of achieving leak-tightness of the system, a covering of the layer of springs is effected by means of a suitable material, preferably of the elastomer type.

7. Suspension system according to any one of the preceding Claims, characterized in that, for the purpose of improving the compression resistance of the layer of springs (24), a winding of circular hoops (26) is formed on said layer of springs (24), before this layer is covered with an elastomer material.

8. Suspension system according to any one of the preceding Claims, characterized in that it is applied to the suspension of a missile (28) in the launching tube (32) of a missile-launching submarine, the suspension being formed :

a) at the upper part of the tube (32) by means of a suspension system (34) according to any one of the preceding Claims, of which the upper ring is connected to the launching tube (32) whereas the lower ring is connected to the missile ;

b) at the lower part of the tube (32) by means of a second suspension system (36), according to any one of the preceding Claims, of which the upper ring is fixed to the missile and the lower ring is fixed to the container tube ;

c) at the lower part of the assembly, by means of a third suspension system (38) according to any one of the preceding Claims, of which the upper part is fixed to the container tube (32) and the lower part is fixed to the hull of the submarine and is designed and constructed in such a way as to leave passages free for hull reinforcements etc.

Fig. 1a

$d_r$  m

10'

Fig. 1b

$d_a$

10''

m

Fig. 1c

Fig. 1d

Fig. 1e

Fig. 1f

Fig. 1g

m

m

m

m

m

10

10

10

10

Fig. 2

12

10

14

Fig. 3

12'

10

14'

## Fig.4

## Fig.5

## Fig.6

## Fig.7

## Fig.8

# Fig. 9